# FASCICULE DE BREVET EUROPEEN

(11) **EP 2 359 044 B1**
(45) Date de publication et mention de la délivrance du brevet: **07.03.2018**
(21) Numéro de dépôt: 09784346.0
(22) Date de dépôt: 20.11.2009
(51) Int. Cl.: F16L 37/084, F16L 21/03, F16L 37/14

(54) **RACCORD EN DEUX PARTIES RELIEES PAR CLIP**
VERBINDER MIT ZWEI DURCH EINE KLAMMER VERBUNDENEN TEILEN
CONNECTOR WITH TWO PARTS CONNECTED BY A CLIP

(30) Priorité: 25.11.2008 FR 0806603
(43) Date de publication de la demande: 24.08.2011
(73) Titulaire: NORMA Autoline France SAS, 35580 Guichen (FR)
(72) Inventeur: PODER, Philippe, F-35580 Guichen (FR)
(74) Mandataire: Patentanwälte Olbricht Buchhold Keulertz
(86) Numéro de dépôt international: PCT/FR2009/001334
(87) Numéro de publication internationale: WO 2010/061072

(56) Documents cités:
- EP-A1- 1 158 236
- DE-A1- 3 729 570
- FR-A1- 2 908 494
- FR-A1- 2 910 109
- GB-A- 2 265 428
- US-A- 6 139 214
- US-A1- 2003 218 334

## Description

La présente invention concerne un raccord utilisable pour relier deux conduits l'un à l'autre, comme par exemple des canalisations entre elles ou une canalisation à un organe émetteur ou récepteur de fluide comme une pompe, un distributeur, un actionneur, un régulateur de débit ou de pression, un réservoir...

### ARRIERE PLAN DE L'INVENTION

Il est connu, notamment des documents EP1158236A1, FR-A-2 908 494 et FR-A-2 910 109, des raccords comprenant un corps délimitant un canal interne et comportant deux parties de corps pourvues chacune de moyens de connexion du canal à un conduit. Les moyens de connexions peuvent être de plusieurs types et comprennent par exemple une section tubulaire mâle à dents de sapin ou en tétine destinée à être engagée à force dans le conduit, une section tubulaire femelle pourvue d'une rondelle dentée ou d'une pince d'accrochage instantané du conduit, un verrou mobile radialement par rapport au corps... Le corps est réalisé d'une seule pièce par moulage mais ceci interdit une quelconque modularité du raccord pour en simplifier la fabrication. Il faut en effet prévoir plusieurs moules pour fabriquer les corps associant les différents types de connexion utilisés.

On connaît par ailleurs des raccords dont le corps est réalisé en deux parties indépendantes. Les parties de corps comprennent alors des portions d'extrémité agencées pour permettre un engagement relatif solidarisant la première partie à la deuxième partie. Les portions d'extrémité comprennent des moyens de leur retenue mutuelle comme des moyens d'encliquetage ou de clipsage selon une direction axiale d'engagement. Or, la plupart des efforts qui s'exercent extérieurement sur un tel raccord ont une composante axiale. Il en résulte que la résistance de la liaison des parties de corps l'une à l'autre est relativement faible.

### OBJET DE L'INVENTION

Un but de l'invention est de fournir une alternative aux modes de liaison des parties de corps entre elles.

### RESUME DE L'INVENTION

A cet effet, on prévoit, un raccord comprenant un corps tubulaire délimitant un canal interne et comportant une première partie de liaison du canal à un élément de circuit et une deuxième partie définissant un logement pour une extrémité de conduite, la première partie et la deuxième partie comportant des portions d'extrémité agencées pour permettre un engagement relatif solidarisant la première partie et la deuxième partie. Le logement s'étend jusque dans la portion d'extrémité. Les portions d'extrémité comportent des ouvertures traversantes en regard pour recevoir un élément de goupillage des parties l'une à l'autre, l'ouverture de la deuxième partie débouchant dans le logement. L'élément de goupillage comporte une portion de verrouillage qui est mobile depuis un état de retenue de l'élément de goupillage en position vers un état de libre extraction de l'élément de goupillage et qui s'étend en saillie dans le logement de telles manières que l'extrémité de conduite empêche la déformation de la portion de verrouillage vers son état de libre extraction.

Ainsi, l'élément de goupillage assure une liaison ferme et résistante des parties de corps l'une à l'autre et l'extrémité de conduite renforce cette liaison en interdisant le retrait de l'élément de goupillage.

Selon un mode de réalisation particulier, l'élément de goupillage comprend un ergot destiné à s'étendre dans les ouvertures et la portion de verrouillage de l'élément de goupillage comprend deux bras s'étendant en arc de cercle depuis l'ergot et, de préférence, l'ergot est sensiblement en forme de U et a des branches se prolongeant pour former les bras de la portion de verrouillage, les bras se rejoignant avantageusement en formant un cercle.

L'élément de goupillage peut ainsi être réalisé facilement par moulage d'un matériau thermoplastique ou par déformation plastique d'un jonc métallique.

Avantageusement encore, les portions d'extrémité comprennent plusieurs ouvertures pour autoriser plusieurs positions angulaires d'engagement relatif des parties de corps et, de préférence, les ouvertures sont disposées pour permettre quatre orientations à 90° les unes des autres.

Ceci est particulièrement intéressant lorsque l'une des deux parties de corps n'est pas symétrique et est par exemple coudée, le coude pouvant être orienté de différentes façons de manière à faciliter l'implantation du raccord dans un circuit en adaptant sa géométrie à son environnement.

D'autres caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 est une vue en perspective partiellement éclatée d'un raccord conforme à l'invention,
- la figure 2 est une vue en perspective montrant le goupillage des parties de ce raccord,
- la figure 3 est une vue de ce raccord en perspective et en coupe longitudinale selon le plan III de la figure 2,
- la figure 4 est une vue de ce raccord en coupe transversale selon le plan IV de la figure 3,
- la figure 5 est une vue montrant l'élément de goupillage avant (a.) et après (b.) introduction de l'extrémité de conduit.

### DESCRIPTION DETAILLEE DE L'INVENTION

En référence aux figures, le raccord conforme à l'invention comprend un corps généralement désigné en 1, de forme tubulaire, qui délimite un canal interne 2 et qui est agencé pour relier le canal interne 2 à deux conduits appartenant par exemple à des organes d'un circuit de fluide, comme des canalisations, un distributeur, un actionneur, un réservoir... Le canal 2 comprend un chambrage d'extrémité formant un logement 19 pour une extrémité 100 d'un des conduits. Le logement 19 est étagé et possède un diamètre minimal de plus grand diamètre que le canal interne 2 (le diamètre minimal du logement 19 est légèrement supérieur au diamètre externe de l'extrémité de conduit 100) et un diamètre maximal du côté de son entrée.

Le corps 1 comporte une première partie de corps et une deuxième partie de corps portant respectivement la référence générale 4, 3. La première partie de corps 4 et la deuxième partie de corps 3 délimitent ainsi chacune un tronçon du canal interne 2.

La partie de corps 3 possède une première portion d'extrémité 5 agencée en portion femelle de connexion à l'extrémité de conduit 100 pour relier ledit conduit au canal interne 2 et, à l'opposé, une deuxième portion d'extrémité 6 agencée en portion mâle de liaison à la partie de corps 4. Le logement 19 s'étend sur toute la longueur de la partie de corps 3 et débouche à l'extérieur du côté de la portion d'extrémité 5 par sa portion de diamètre maximal qui présente un orifice d'entrée de l'extrémité de conduit 100 dans le raccord. La portion d'extrémité 5 est pourvue de moyens de connexion connus en eux-mêmes et comportant ici un verrou mobile radialement pour coopérer avec un relief externe de l'extrémité de conduit 100. La portion d'extrémité 6 est formée d'une paroi tubulaire pourvue de quatre ouvertures 7, traversantes, disposés symétriquement à 90° les uns des autres pour déboucher transversalement dans le logement 19.

La partie de corps 4 possède une première portion d'extrémité 8 agencée en portion mâle de connexion à une extrémité de l'autre des conduits pour relier ledit conduit au canal interne 2 et, à l'opposé, une deuxième portion d'extrémité 18 agencée en portion femelle de liaison à la partie de corps 3. La première partie de corps 4 est coudée de telle manière que la portion d'extrémité mâle 8 fait un angle de 90° par rapport à la portion d'extrémité 18. La portion d'extrémité 8 est pourvue de moyens de connexion, à savoir ici de dents de sapin en saillie externe, et est agencée pour être engagée à force dans ladite extrémité dudit conduit. La portion d'extrémité 18 délimite l'extrémité 19.1 du logement 19 qui se raccorde au canal 2 par un épaulement formant butée pour l'extrémité de conduit 100 et délimite également un chambrage 10 de réception de la portion d'extrémité 6. Le logement 19 reçoit du côté de la portion d'extrémité 8 des éléments d'étanchéité 23 destinés à enserrer l'extrémité de conduit 100 qui sera retenue par les moyens de connexion de la partie de corps 3. La paroi de la portion d'extrémité 18 délimitant le chambrage 10 est pourvue de deux ouvertures 9, traversantes, disposées symétriquement à 180° les unes des autres.

Le raccord de l'invention comprend également un élément de goupillage 20 comportant une portion de verrouillage 21 de forme annulaire et deux ergots 22 diamétralement opposés.

Plus précisément, l'élément de goupillage 20 est formé d'un élément allongé conformé pour définir les deux ergots 21 en forme d'un U dont les branches s'arrondissent vers l'extérieur et se rejoignent pour former la portion de verrouillage 21. La portion de verrouillage 21 a un diamètre externe sensiblement égal au diamètre interne de la portion d'extrémité 6 et un diamètre interne légèrement inferieur au diamètre externe de l'extrémité de conduit 100, la portion de verrouillage 21 est élastiquement déformable depuis un état de repos dans lequel le diamètre externe est sensiblement égal au diamètre interne de la portion d'extrémité 6 et un état aplati dans lequel la dimension transversale de l'élément de goupillage (mesurée perpendiculairement à un axe médian passant par les ergots 22) est au plus égal à la dimension des ouvertures 7, 9 (mesurée perpendiculairement à l'axe central du raccord).

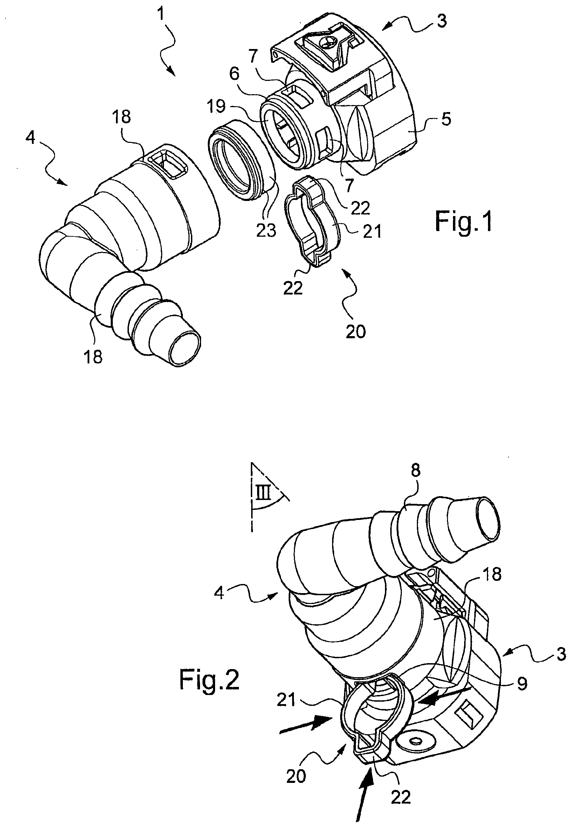

Le montage du raccord revient à engager axialement la portion d'extrémité 6 dans le chambrage 10 en faisant correspondre les ouvertures 7 et les ouvertures 9 (figure 2).

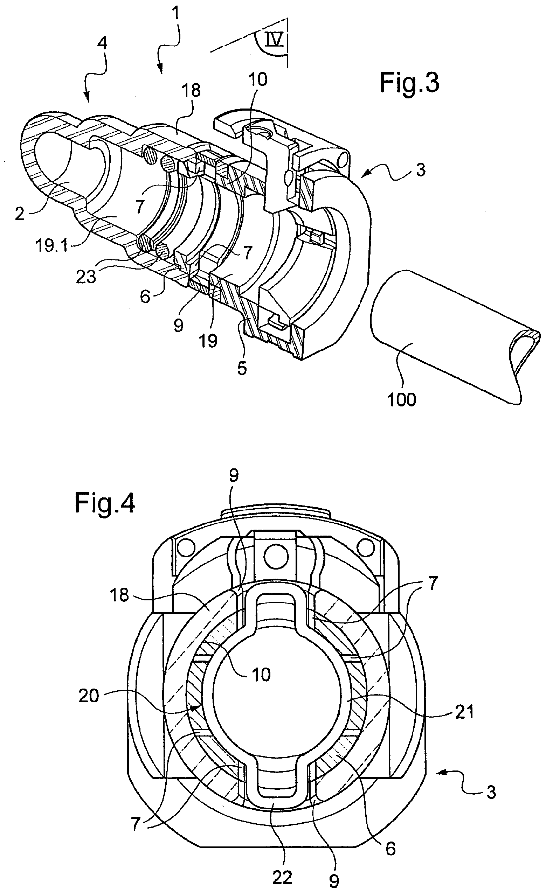

L'élément de goupillage 20 est ensuite mis en place. Pour ce faire, la portion de verrouillage 21 de l'élément de goupillage est aplatie pour permettre son introduction dans le logement 19 en passant par une ouverture 9 et une ouverture 7 en regard. Une fois les ouvertures passées, la portion de verrouillage 21 reprend sa forme et s'étend transversalement dans le logement 19 (figures 3 et 4). Les ergots 22 sont eux reçus dans deux paires d'ouvertures 7, 9 en regard, lesdites paires étant diamétralement opposées. L'élément de goupillage 20 constitue ainsi un élément de goupillage des parties de raccord l'une à l'autre.

Lorsque l'extrémité de conduit 100 est introduite dans le raccord, l'extrémité de conduit 100 s'engage dans la portion de verrouillage 21 et interdit de ce fait un aplatissement de ladite portion de verrouillage et s'oppose à une extraction de l'élément de goupillage 20. L'extrémité de conduit 100 est engagée à force dans la portion de verrouillage 21. L'élément de goupillage est ainsi contraint sur le corps et sur l'extrémité de conduit qui s'en trouve déformée, ce qui permet l'élimination des jeux de montage et éventuellement une conductivité électrique entre l'extrémité de conduit et le raccord.

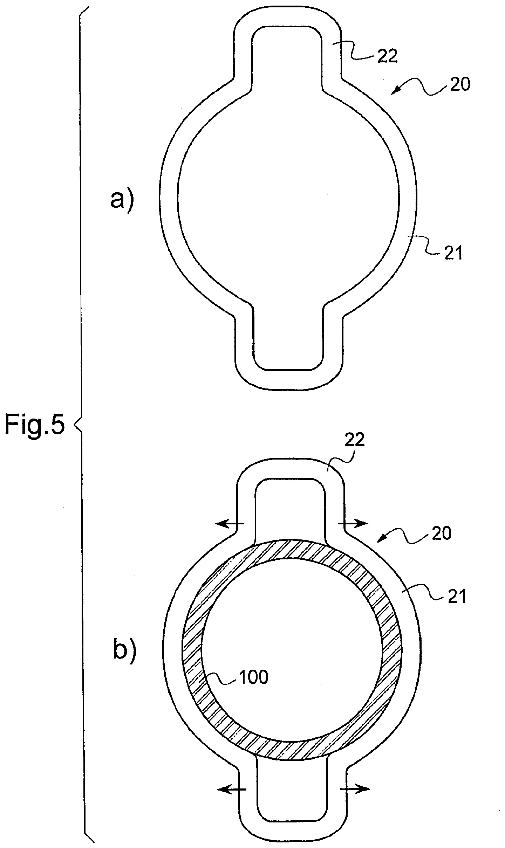

Plus précisément, on peut voir en comparant les figures 5a. et 5b. que l'engagement à force de l'extrémité de conduit 100 provoque un écartement des branches des ergots 21 qui vont être appliquées contre deux parois latérales opposées des ouvertures 7, 9 assurant ainsi un contact. Cette mise en contact permet la suppression des jeux de fonctionnement et - si l'élément de goupillage, les parties de corps et l'extrémité de conduit sont en matériaux électriquement conducteurs (métal ou polymère conductif par exemple)-assure une continuité électrique permettant la dissipation des charges électriques pouvant s'accumuler dans le circuit de transport de fluide.

La première partie de corps 4 est coudée de telle manière que la portion d'extrémité mâle 8 fait un angle de 90° par rapport à la portion d'extrémité 18.

On comprend que l'agencement symétrique à 90° des ouvertures 7 autorise quatre orientations possibles des parties de corps l'une par rapport à l'autre, ce qui permet ici de choisir l'orientation du verrou de la deuxième partie de corps 3 par rapport à la portion d'extrémité mâle 8 de la deuxième partie de corps 4 de manière à favoriser l'accessibilité au verrou en fonction de l'environnement du raccord.

Bien entendu, l'invention n'est pas limitée aux modes de réalisations décrits mais englobe toute variante entrant dans le champ de l'invention telle que définie par les revendications.

En particulier, le nombre et le positionnement des ouvertures 7, 9 peuvent être différents de ceux décrits ci-dessus. Le nombre et la position des ergots et des rainures peuvent ainsi être modifiés, par exemple en fonction du nombre d'orientations angulaires possibles qu'on souhaite avoir entre les parties de corps.

D'autres moyens de connexion sont utilisables et notamment des moyens de connexion instantanés ou non, des moyens à emmanchement à force ou clipsables, une rondelle dentée ou une pince d'accrochage... Le raccord peut comporter deux extrémités mâles ou deux extrémités femelles.

La liaison entre la première partie de corps et la deuxième partie de corps peut être réalisée comme ici en amont des éléments d'étanchéité 20 (par référence au sens d'introduction de l'extrémité de conduit dans le chambrage de la première portion d'extrémité) ou en aval de ces éléments d'étanchéité mais il est alors nécessaire de prévoir des éléments d'étanchéité supplémentaires entre la première partie de corps et la deuxième partie de corps.

L'élément de goupillage peut avoir une forme différente de celle représentée et par exemple en épingle. L'élément de goupillage comprend alors un ergot à partir duquel s'étendent deux branches divergentes pour former la portion de verrouillage. Les branches sont élastiquement déformables vers un état de libération dans lequel elles sont parallèles l'une à l'autre pour permettre le passage de la portion de verrouillage dans les ouvertures. Lorsque l'extrémité de conduit est engagée dans le raccord, les deux branches sont prisonnières entre la paroi du raccord et l'extrémité de conduit qui interdit leur déformation vers leur état de libération.

Le raccord peut être rectiligne.

En variante la portion de verrouillage 21 peut être plastiquement déformable ou articulée pour être mobile entre ses deux états.

## Revendications

1. Raccord comprenant un corps tubulaire (1) délimitant un canal (2) interne et comportant une première partie (4) de liaison du canal à un élément de circuit et une deuxième partie (3) définissant un logement (19) pour une extrémité de conduite, la première partie et la deuxième partie comportant des portions d'extrémité (6, 18) agencées pour permettre un engagement relatif solidarisant la première partie et la deuxième partie, tel que le logement s'étend jusque dans la portion d'extrémité, le raccord comprend un élément de goupillage (20) des parties l'une à l'autre, les portions d'extrémité comportent des ouvertures (7, 9) traversantes en regard pour recevoir l'élément de goupillage (20), l'ouverture de la deuxième partie débouchant dans le logement, et l'élément de goupillage comprend un ergot (22)
destiné à s'étendre dans les ouvertures (7, 9) et une portion de verrouillage (21) comprenant deux bras mobiles l'un par rapport à l'autre depuis une position écartée correspondant à un état de retenue de l'élément de goupillage sur le raccord vers une position rapprochée correspondant à un état de libre extraction de l'élément de goupillage, les bras s'étendant en saillie dans le logement de telle manière que l'extrémité de conduite empêche le déplacement des bras de la portion de verrouillage vers l'état de libre extraction, les bras de la portion de verrouillage (21) de l'élément de goupillage s'étendant en arc de cercle depuis l'ergot.

2. Raccord selon la revendication 1, dans lequel l'ergot (22) est sensiblement en forme de U et a des branches se prolongeant pour former les bras de la portion de verrouillage (21).

3. Raccord selon la revendication 2, dans lequel les bras se rejoignent en formant un cercle.

4. Raccord selon l'une quelconque des revendications 1 à 3, dans lequel l'élément de goupillage (20) comprend deux ergots (22) diamétralement opposés, les parties de corps comportant deux ouvertures (7, 9) diamétralement opposées.

5. Raccord selon la revendication 1, dans lequel les portions d'extrémité (8, 18) comprennent plusieurs ouvertures (7, 9) pour autoriser plusieurs positions angulaires d'engagement relatif des parties de corps (3, 4) .

6. Raccord selon la revendication 5, dans lequel les ouvertures (7, 9) sont disposées pour permettre quatre orientations à 90° les unes des autres.

7. Raccord selon la revendication 1, la portion de verrouillage est élastiquement déformable entre ses deux états.

## Patentansprüche

1. Kupplung, die einen rohrförmigen Körper (1) umfasst, der einen internen Kanal (2) begrenzt und einen ersten Abschnitt (4) zur Verbindung des Kanals mit einem Schaltungselement und einen zweiten Abschnitt (3) aufweist, der eine Aufnahme (19) für ein Rohrende definiert, wobei der erste Abschnitt und der zweite Abschnitt Endabschnitte (6, 18) aufweisen, die angeordnet sind, um einen relativen Eingriff zu ermöglichen, der den ersten Abschnitt fest an dem zweiten Abschnitt befestigt, so dass sich die Aufnahme bis zu dem Endabschnitt erstreckt, wobei die Kupplung ein Element zum Verstiften (20) der Abschnitte miteinander umfasst, wobei die Endabschnitte durchgehende Öffnungen (7, 9) gegenüber aufweisen, um das Element zum Verstiften (20) aufzunehmen, wobei die Öffnung des zweiten Abschnitts in der Aufnahme mündet, und wobei das Element zum Verstiften einen Nocken (22), der dazu bestimmt ist, sich in die Öffnungen (7, 9) zu erstrecken, und einen Verriegelungsabschnitt (21) umfasst, der zwei Arme aufweist, die relativ zueinander von einer entfernten Position, die einem Zustand zum Rückhalten des Elements zum Verstiften auf der Kupplung entspricht, zu einer nahen Position beweglich ist, die einem Zustand zur freien Entnahme des Elements zum Verstiften entspricht, wobei die Arme so in die Aufnahme hervorstehen, dass das Ende des Rohrs die Verschiebung der Arme des Verriegelungsabschnitts zu dem Zustand zur freien Entnahme verhindert, wobei sich die Arme des Verriegelungsabschnitts (21) des Elements zum Verstiften sich im Kreisbogen von dem Nocken erstrecken.

2. Kupplung nach Anspruch 1, wobei der Nocken (22) im Wesentlichen U-förmig ist und Beine hat, die sich erstrecken, um die Arme des Verriegelungsabschnittes (21) zu bilden.

3. Kupplung nach Anspruch 2, wobei die Arme zusammenlaufen, wobei sie einen Kreis bilden.

4. Kupplung nach einem der Ansprüche 1 bis 3, wobei das Element zum Verstiften (20) zwei diametral gegenüberliegende Nocken (22) umfasst, wobei die Körperabschnitte zwei diametral gegenüberliegende Öffnungen (7, 9) aufweisen.

5. Kupplung nach Anspruch 1, wobei die Endabschnitte (8, 18) mehrere Öffnungen (7, 9) umfassen, um mehrere Winkelpositionen zum relativen Eingriff von Körperteilen (3, 4) zu ermöglichen.

6. Kupplung nach Anspruch 5, wobei die Öffnungen (7, 9) angeordnet sind, um vier Ausrichtungen von 90° zueinander zu ermöglichen.

7. Kupplung nach Anspruch 1, der Verriegelungsabschnitt zwischen seinen zwei Zuständen elastisch verformbar ist.

## Claims

1. Joint comprising a tubular body (1) defining an internal channel (2) and comprising a first piece (4) for connecting the channel to a circuit element and a second piece (3) defining a housing (19) for a pipe end, the first piece and the second piece comprising end portions (6, 18) arranged so that these engage, securing the first piece and the second piece, in such a way that the housing runs into the end portion, the joint comprises an element (20) for keying the pieces to each other, the end portions comprise opposite through-openings (7, 9) for accommodating the keying element (20), the second piece's opening running into the housing and the keying element comprises a lug (22) intended to run in the openings (7, 9) and a locking portion (21) comprising two arms which are movable relative to each other from a remote position corresponding to a state of retention of the keying element on the joint to a close position corresponding to a state of free extraction of the keying element, the arms running in a protruding manner in the housing so that the pipe end prevents the movement of the locking portion arms to the state of free extraction, the arms of the locking portion (21) of the keying element running in an arc of a circle from the lug.

2. Joint according to claim 1, wherein the lug (22) is substantially of a U shape and has branches extending to form the arms of the locking portion (21).

3. Joint according to claim 2, wherein the arms meet, forming a circle.

4. Joint according to any of claims 1 to 3, wherein the keying element (20) comprises two diametrically opposite lugs (22), the body pieces comprising two diametrically opposite openings (7, 9).

5. Joint according to claim 1, wherein the end portions (8, 18) comprise several openings (7, 9) to allow several angular positions of engagement of the body pieces (3, 4) with each other.

6. Joint according to claim 5, wherein the openings (7, 9) are arranged so that there can be four orientations at 90° to one another.

7. Joint according to claim 1, the locking portion is elastically deformable between its two states.
